# EUROPEAN PATENT SPECIFICATION

(11) **EP 2 827 031 B1**
(45) Date of publication and mention of the grant of the patent: **31.10.2018**
(21) Application number: 13382289.0
(22) Date of filing: 15.07.2013
(51) Int. Cl.: F16K 11/085, F25D 17/00

(54) **Residual water evacuation network**
Abwasserentwässerungsnetzwerk
Réseau d'évacuation résiduelle d'eaux usées

(43) Date of publication of application: 21.01.2015
(73) Proprietor: ABN Pipe Systems, S.L.U., 15008 A Coruña (ES)
(72) Inventor: Vazquez Sanchez, Javier Antonio, 15008 A CORUÑA (ES); Rosa Ariza, David, 15008 A CORUÑA (ES); Lorenzo Magaz, Santiago, 15008 A CORUÑA (ES); Campo Arnaiz, Rosa Ana, 15008 A CORUÑA (ES)
(74) Representative: Carpintero Lopez, Francisco

(56) References cited:
- EP-A1- 2 299 153
- DE-A1-102007 002 051
- DE-C1- 4 416 039
- FR-A- 1 556 385
- FR-A1- 2 199 083
- US-A- 4 550 771

## Description

### Invention field

The present invention refers to a residual water evacuation network, referring particularly to a network for evacuating sanitary water, which is poured into main drains, at temperatures higher than those of supply network water.

The invention falls within the field of energy saving systems and is particularly applicable to new-build houses, hospitals, hotels and offices, etc.

The water collected by the evacuation network in a building may be classified in the following categories:
a) Greywater, which encompasses water types originating from all sanitary apparatus except WCs, which are relatively dirty, containing hardly any solid residue and diluted elements such as fats, detergents etc.
b) Blackwater, which encompasses water types containing fecal materials originating from WCs. These types of water have high contaminant content,
c) Whitewater, which encompasses, rain water, snowfall etc., collected on the roofs and terraces of buildings. These types of water are generally quite clean.

Of the abovementioned water types, only the first, Greywater type, may need to be heated prior to being used. These waters are poured into the main drain at temperatures somewhat higher than those of the input water, using heat which may be recovered, at least partially, before being poured into the output network.

### Invention background

ES2259921 describes a heat saving system which utilizes the evacuation heat in residual waters, by sending the aggregate residual water to an exchange deposit, wherein the dirty water originating from the main drain piping pre-heats the clean water. This system is problematic in that in using all of the dirty water, the hot and cold greywater and cold blackwater, originating from different sanitary apparatus, are mixed, which thereby reduces the temperature of the water entering into the exchanger. Another limitation is that the water originating from the main drain piping drags high quantities of solid residue, since it includes both greywater and blackwater.

US4550771 and EP05329110 may also be cited as background to the present invention, wherein residual water heat recovery devices or installations are described, in which the dirty water originating from various sanitary apparatus is stored in a hot-water collector, before said water is sent to a heat exchanger, when the temperature of the water stored exceeds a reference value, whilst, in contrary cases, it is sent to the drain.

These systems store water at different temperatures in the hot water collector, so that when the water comes out of the collector, the water will be at a lower temperature than that needed in order make use of it, in which case the water will be sent to the drain. Therefore, water from which no heat at all was recovered has been stored.

GB2304877 describes a water supply system with heat recovery, wherein the water poured into the drain, originating from various sanitary apparatus, may be pumped, depending on the water temperature, towards a hot-water storage tank, from where it may be sent to a heat exchanger. This installation may be expensive since it requires a pump and storage tank, in order to make use of the residual water heat in the heat exchanger.

In the same sense, DE102007002051 discloses a residual water evacuation network according to the preamble of claim 1.

### Description of the invention

The object of the present invention is a sanitary water evacuation network, which is simple in terms of formation and function, through which the heat of residual water originating from sanitary apparatus, machines or points at which hot-water may optionally be used, can be utilized, which is why constant temperature control is exercised on the water originating from such apparatus and points, in order to send the water, depending on the temperature thereof, to a heat recovery installation or to the general deposit.

The residual water evacuation network according to the invention is defined by claim 1 and comprises
- a bypass valve equipped with at least one input mouth and two output mouths,
- a plurality of sanitary apparatus which may optionally be used with hot water, each apparatus having a drain for sewage,
- the drains of said sanitary apparatus being connected to the input mouth or the input mouths,
- a heat recovery installation,
- a pipe connecting the heat recovery installation with one of the output mouths of the bypass valve,
- a main drain to collect the sewage,
- a pipe connecting the main drain with the other output mouth of the bypass valve,
- wherein the bypass valve closes and opens the output mouths depending on the temperature of the water passing through said inlet mouths such that the sewage is directed either to the heat recovery installation or to the main drain,
- wherein the bypass valve comprises a cylindrical shell having an axis and the at least one input mouth and the two output mouths on its wall, the cylindrical shell further houses a curved gate, which has the form of a segment of a circle smaller in radius to the chamber, this gate being fitted against the internal surface of the chamber and mounted to a rotation shaft coinciding with the axis of the cylindrical shell, upon which it can rotate between alternate closing and opening positions of one or the other output mouths, said gate being linked to an operating means.

According to the invention, the bypass valve is combined with a siphon trap comprising a input chamber, a output chamber and a stretch of wall externally closing the input chamber, the input mouth or mouths, whilst the two output mouths are located on the stretch of wall which limits the output chamber externally, the gate which alternately closes and opens one or the other output mouths being mounted to the siphon trap of the same, within the output chamber, depending on the temperature of the water passing through said siphon trap.

Henceforth, according to the invention, the evacuation network is equipped with a bypass valve, which has at least one input mouth and two output mouths. The input mouth or mouths are connected to the drains of other such sanitary apparatus or points, which may optionally use hot-water. The first output mouth leads the water crossing the valve to a heat recovery installation, the second output mouth to the main drain. The valve opens or closes the bypass towards one or the other of the output mouths, depending on the temperature of the water flowing through said valve.

The water evacuation network object of the invention is particularly apt for use in new-build buildings, be they houses, offices, hospitals or hotels, etc. The bypass valve will be linked to operating means, which may consist, for example, in a micromotor, which will act according to the orders received from a temperature sensor, which may be installed to the valve input or installed therein.

The formation described means that, in comparison to a traditional water evacuation network, the network object of the invention only needs the bypass valve to be arranged and two evacuation channels to be installed from said valve, one running towards the heat exchanger and the other towards the main drain.

The bypass valve may only have one input mouth, an output valve being applied to each piece of sanitary apparatus or may have a series of input mouths in order to receive the water originating from two or more pieces of sanitary apparatus.

In order to prevent contaminative remnants from being contained in the hot water sent to the heat recovery installation, it may have a simple system of very thick filters, located downstream from the valve.

In order to make optimal use of the energy, the hot-water evacuation network will be formed by pipes in the corresponding heat insulation.

In summary, the installation of the residual water evacuation network object of the invention, would require the evacuation networks to be separated into greywater and blackwater, a valve to be introduced into the greywater evacuation network, which distinguishes the water circulating depending on its temperature, for two forks coming out from the valve, one of them directing the hot water and the other the cold water, a filter system to be incorporated into the hot network and heat insulated pipes to be used in the hot network. With this arrangement, the water passing through, the valve at a temperature exceeding a prearranged value will be sent to a heat recovery installation, whilst when the temperature of the water is below a prearranged value, it will be sent directly to the main drain.

The network installation with the described formation is relatively low-cost, within the general construction costs of a building. Furthermore, once the network has been installed, it needs hardly any additional maintenance, thus providing means which make it possible to improve the energy and environmental rating of the building constructed.

The bypass valve according to the invention is formed by a cylindrical shell, which has at least one input mouth and two output mouths on its wall. A curved gate will be arranged within this chamber, which is cylindrical in form and equal in radius to the chamber and which will be fitted against the internal surface of said chamber and mounted to a rotation shaft coinciding with an axis of the cylindrical shell. The gate may rotate on this shaft between alternate closed and open positions in one or the other output mouths, the input mouth always remaining open. The gate will be linked to an operating means which may consist of an electrical micro-motor, which may be arranged externally on one of the cylindrical shell bases, connected to the gate shaft.

According to the invention the bypass valve is combined with a siphon trap, which will be arranged on a stretch of wall which limits the input chamber of the input month or months externally, whilst the two output mouths would be arranged on stretch of wall which limits the chamber externally. Within the output chamber, the valve gate charged with closing and opening one of the output mouths alternately is mounted to the siphon trap.

In any of the cases set-out above, the gate may comprise armor on its concave side through which it is mounted on the rotation shaft. This armor may be formed by two coplanar radial arms, arranged between the concave surface of the gate and a central ring which is coaxial to said gate and which will serve mounting to the rotational shaft. A micro-motor will be mounted to one of the bases of the cylindrical shell of the siphon trap, in order to operate the gate, protected by the corresponding gate.

The bypass valve may be a motorized valve, activated depending on the temperature detected by a temperature sensor. When this temperature exceeds a prearranged value, the valve opens the output mouth which leads to the heat recovery installation, whilst the other output mouth closes. If the temperature detected by the sensor is lower than the prearranged value, the valve closes the output mouth leading to the heat recovery installation and opens the mouth leading to the main drain.

In the invention network, the bypass valve may be installed in the output of each piece of sanitary apparatus, followed by the siphon trap, through which the water originating from the various pieces of sanitary apparatus or, as in previous cases, even being formed as the siphon trap itself.

### Brief description of the drawings

The following set of drawings, attached for clarification purposes, represents a non-limiting example embodiment of a water evacuation network, built in accordance with the invention, wherein:
Figure 1 is a schematic representation of a water evacuation network which includes the characteristics of the invention.
Figure 2 is a side elevation of the valve which enters to form part of the network represented in figure 1.
Figure 3 is a plan view of the valve shown in figure 2.
Figure 4 is a perspective view of the shell of the valve, shown in figures 2 and 3, without the lid and the upper chamber in which the operating motor is housed.
Figure 5 is a diametrical cross-section of the same shell, represented according to the line V-V shown in figure 4.
Figure 6 is a perspective view of the gate which comes to form part of the valve shown in figures 2 and 3.
Figure 7 is a perspective view of a possible alternative embodiment of the bypass valve.
Figure 8 is a perspective view of the lower shell of the valve shown in figure 7, without the lid and upper chamber.
Figure 9 is a plan view of the shell shown in figure 8.

### Detailed description of an embodiment

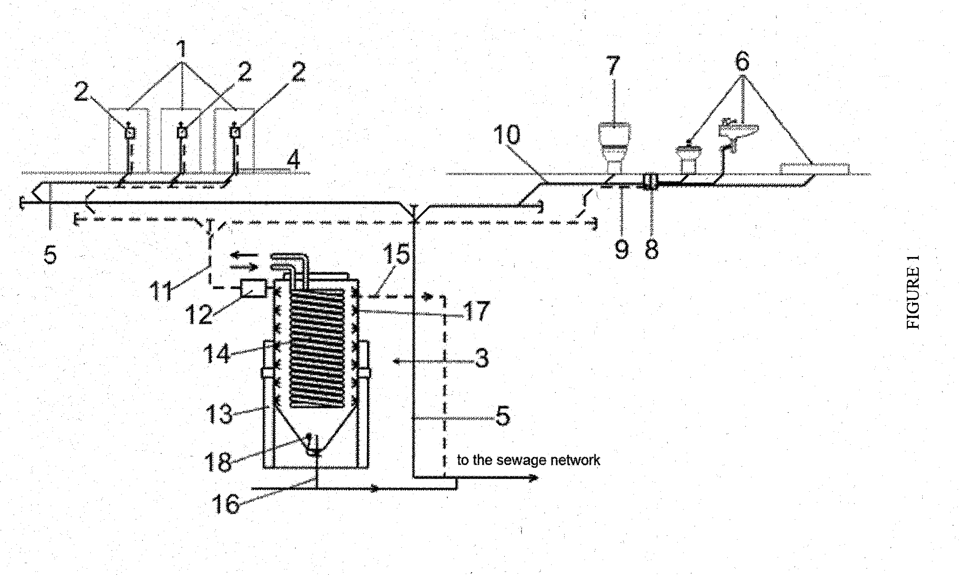

Figure 1 is a schematic representation of a sanitary water evacuation network, for example in a detached house or home in a block of flats, which includes a series of apparatus (1) in which hot water may be used when they are running and which may consist, for example, in a washing machine, dishwasher, sink, etc. A bypass valve (2) is fitted to the output of each piece of this apparatus (1), which sends the water originating from said apparatus (1), depending on the temperature detected therein by a temperature sensor, to a heat recovery installation (3), through a channel (4) or towards the main drain (5) through a channel.

The house may also include a series of sanitary apparatus (6) with which hot water and a WC (7) may optionally be used, the functioning of which will always be carried out with cold water originating from the supply network.

Just as with the apparatus (1), a valve may be installed at the output of each piece of the sanitary apparatus (6), serving the same function as bypass valve (2), installed in the output of the apparatus (1). Alternatively, the drain of the various sanitary apparatus (6) may lead through a single bypass valve (8) which, depending on the temperature of the water passing through the same, will send the water to the heat recovery installation (3), through a channel (9) or towards the main drain (5), through a channel (10). The WC (7) drain may be connected to the channel (10), which leads to the main drain (5).

The channels (9, 4) may be joined to a stretch of common piping (11) in order to pass through, a filter (12) located before the heat recovery installation (3) input.

In the example represented in the drawings, the heat recovery installation (3) includes a deposit (13) where the mouth of the common piping (11) can be found, after passing through a filter (12). A heating coil (14) through which the clean water will pass to be pre-heated before subsequently being used in a heating or sanitation installation etc. is arranged within the deposit (13). The deposit (13) may be equipped with an upper emptying output (15), in order to allow overflow functions, which leads towards the main drain (5), and a lower output (16), in order to empty the deposit (13), which also leads towards the main drain (5). Internal diffusers (17) may also be installed in the deposit (13), in order to clean the heating coil (14), in addition to a temperature sensor (18).

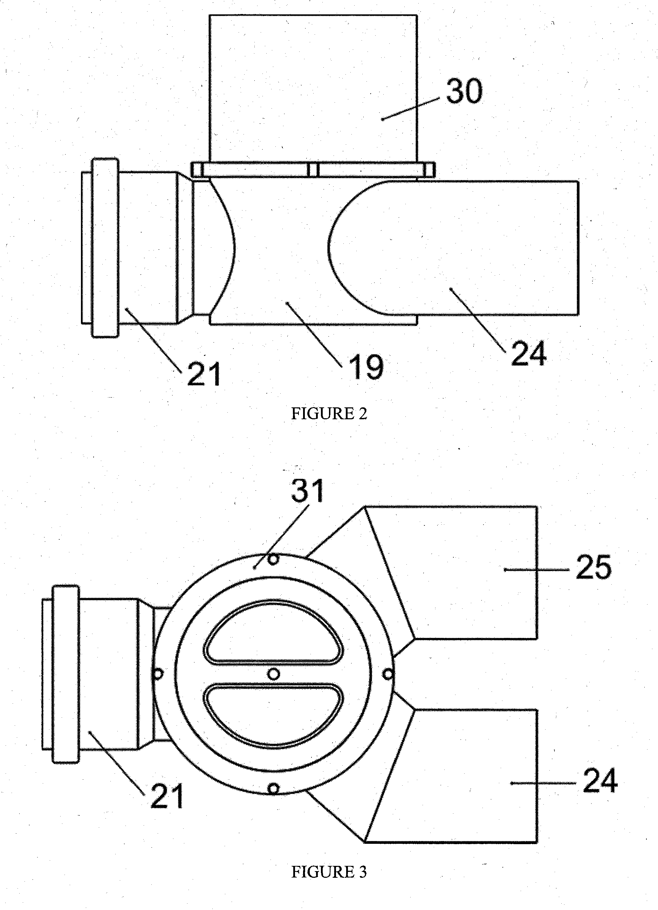

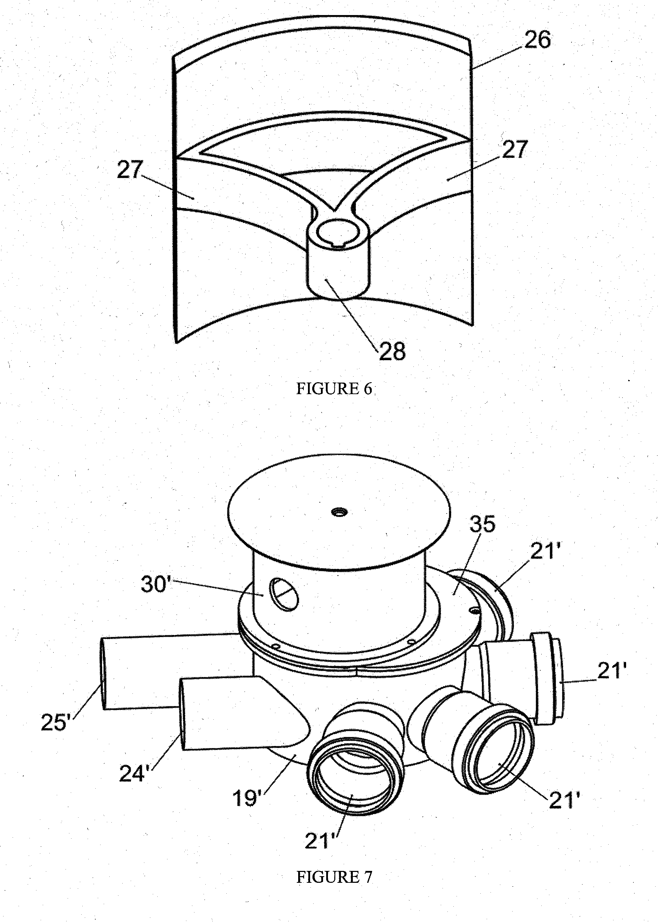

Figures 2 to 5 represent one possible embodiment of the bypass valve (2) installed in the output of each piece of apparatus (1). This valve comprises a cylindrical shell (19), open at one of its bases and equipped with an input mouth (20) on its wall, surrounded externally by a tubular stretch (21) and by two output mouths (22, 23), which equally part tubular stretches (24, 25) externally. A curved gate (26) (figure 6) is housed within the cylindrical shell (19), which is in a form of segment of a circle and has a radius smaller to that of the cylindrical shell (19). This curved gate (26) is linked to the internal surface of the cylindrical shell (19) wall, with an angle wide enough to be able to close one of the output mouths (22, 23).

The curved gate (26) is subsequently equipped with armour formed by two coplanar radial arms (27) which run from the concave surface of the curved gate (26) to a central ring (28) which is coaxial to said curved gate (26). The curved gate (26) is mounted within the cylindrical shell (19) via this central ring (28) with the ability to rotate around an axis which passes through the central ring (28) and is attached in a shell (29) which protrudes internally in closed position from the bottom of the cylindrical shell (19).

The curved gate (26) can rotate around the shell (29) to which it is mounted between closed and open positions of one or the other output mouths (22, 23) of the cylindrical shell (19). Therefore, a chamber (30) may be arranged on the cylindrical shell (19), in which a micro-motor is housed, the shaft of which is connected to the shell (29) in the curved gate (26) and which receives operating commands from a heat sensor which may be mounted within the cylindrical shell (19) or immediately in front of the same. The chamber (30) is closed by means of an upper lid (31), which facilitates access to the micro-motor housed therein.

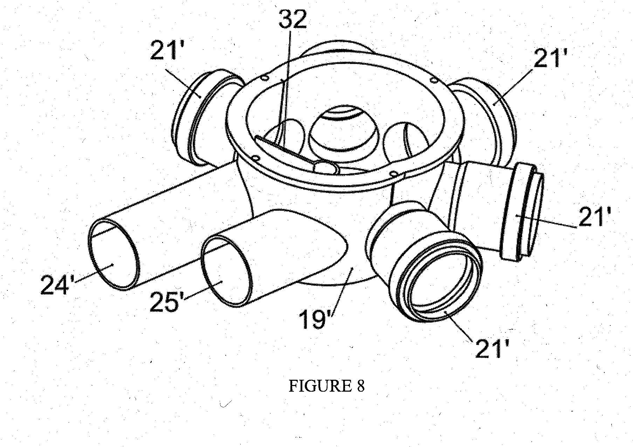

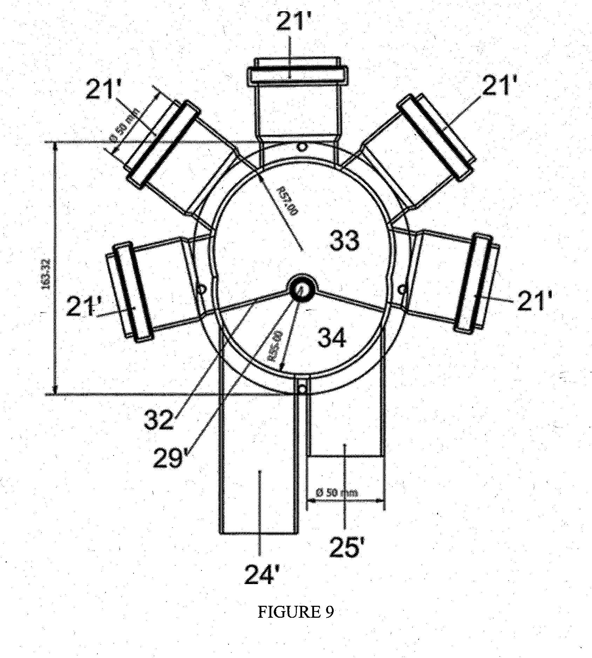

Figures 7 to 9 represent an embodiment in which the bypass valve (2, 8) is combined with a siphon trap, the cylindrical shell (19') of which is internally divided, by a partition (32), into an input chamber (33) and an output chamber (34), as best represented in figure 9. The cylindrical shell (19') wall has a series of input months on the tubular stretches (21') which closes the input chamber (33) externally, each one of which will be connected to the output or drain of one of the pieces of sanitary apparatus (6), shown in figure 1. In the stretch which closes the output chamber (34) externally, there are two tubular stretches (24', 25') connected to the output mouths on the wall of the cylindrical shell (19'), just like the cylindrical shell (19) of the bypass valve (2, 8) shown in figures 2 and 3.

The curved gate (26) shown in figure 6 will be mounted within the output chamber (34) by means of a shaft which passes through the central ring (28) and is fixed in the shell (29') protruding from the bottom of the cylindrical shell (19').

Looking at figure 7, it is possible to see that the cylindrical shell (19') is closed by means of a lid (35) upon which the chamber (30') is located in which the micro-motor is housed, the shaft of which is connected to the curved gate (26) shafts in a similar way to that described, as shown in figures 2 to 6.

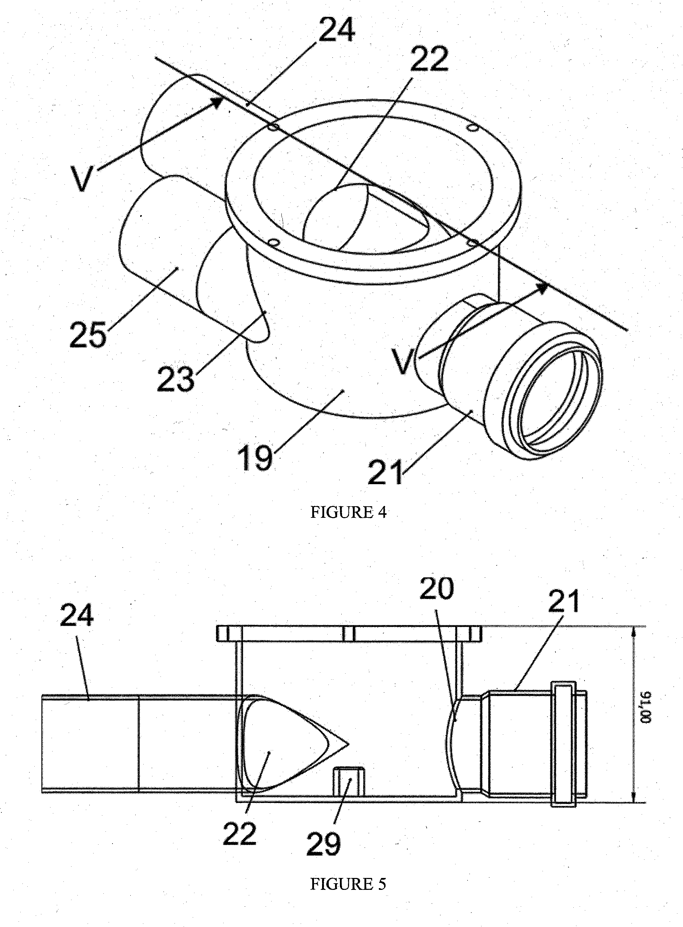

The bypass valve (2, 8) formed according to figures 2 and 5 may be mounted to the output of each piece of apparatus (1) or downstream from the traditional siphon trap, which collects water from the sanitary apparatus (6).

The bypass valve (2, 8) formed according to figures 7 to 9, constitutes the valve shown in the figure 1, which is combined with a siphon trap and receives the water from the various pieces of sanitary apparatus (6) directly.

The tubular stretches (24, 25, 24', 25') which surround the output mouths (22, 23) externally will preferably be different in length in order to facilitate connection to the pipes which lead the water towards the heat recovery installation (3) or towards the main drain (5).

In the formation described, the water originating from the apparatus (1, 6), which passes through the bypass valves (2, 8) will be directed to the heat recovery installation (3) when it reaches a temperature which exceeds that of a prearranged value, whilst, when the temperature of the water is lower than that of said value, it will be directed towards the main drain (5).

## Claims

1. Residual water evacuation network, comprising
- a bypass valve (2, 8) equipped with at least one input mouth (20) and two output mouths (22, 23),
- a plurality of sanitary apparatus (6) which may optionally be used with hot water, each sanitary apparatus (6) having a drain for sewage,
- the drains of said sanitary apparatus (6) being connected to the input mouth or the input mouths (20),
- a heat recovery installation(3),
- a channel (4, 9) connecting the heat recovery installation (3) with one of the output mouths (22, 23) of the bypass valve (2, 8),
- a main drain (5) to collect the sewage,
- a channel (10) connecting the main drain (5) with the other output mouth (22, 23) of the bypass valve (2, 8),
- wherein the bypass valve (2, 8) closes and opens the output mouths (22, 23) depending on the temperature of the water passing through said input mouths (20) such that the sewage is directed either to the heat recovery installation (3) or to the main drain (5),
**characterized in that**
the bypass valve (2, 8) comprises a cylindrical shell (19, 19') having an axis and the at least one input mouth (20) and the two output mouths (22, 23) on its cylindrical wall, the cylindrical shell (19, 19') further houses a curved gate (26), which has the form of a segment of a circle smaller in radius to the cylindrical shell (19, 19'), this curved gate (26) being fitted against the internal surface of the cylindrical shell (19, 19') and mounted to a rotation shaft coinciding with the axis of the cylindrical shell (19, 19'), upon which it can rotate between alternate closing and opening positions of one or the other output mouths (22, 23), said curved gate (26) being linkable to an operating means,
wherein the bypass valve (2, 8) is combined with a siphon trap comprising an input chamber (33) and an output chamber (34), which chambers (33, 34) are divided by a partition arranged in the cylindrical shell (19, 19'), wherein the at least one input mouth (20) is on the part of the cylindrical shell (19, 19") closing the input chamber (33), and the output mouths (22, 23) are on the part of the cylindrical shell (19, 19') closing the output chamber (34), the curved gate (26) being mounted within the output chamber (34).

2. Network according to claim 1, wherein the cylindrical shell (19, 19') comprises two bases and one gate shaft, wherein the operating means consists of an electronic micro-motor, located externally on one of the bases of the cylindrical shell (19, 19') and connected to the curved gate (26) shaft.

3. Network according to claim 1, **characterized in that** the curved gate (26) comprises armor composed of two coplanar radial arms (27) which run between a concave surface of the curved gate (26) and a central ring which is coaxial to the rotation shaft of said gate (26) coinciding with the axis of the cylindrical shell (19, 19').

## Patentansprüche

1. Abwasserentleerungsnetzwerk, umfassend
- ein Bypassventil (2, 8), ausgerüstet mit mindestens einer Eingangsmündung (20) und zwei Ausgangsmündungen (22, 23),
- eine Mehrzahl von Sanitärvorrichtungen (6), welche optional mit heißem Wasser eingesetzt werden können, wobei jede Sanitärvorrichtung (6) einen Abfluss für Abwasser aufweist,
- wobei die Abflüsse der Sanitärvorrichtungen (6) mit der Eingangsmündung oder den Eingangsmündungen (20) verbunden sind,
- eine Wärmerückgewinnungsvorrichtung (3),
- einen Kanal (4, 9), welcher die Wärmerückgewinnungsvorrichtung (3) mit einer der Ausgangsmündungen (22, 23) des Bypassventils (2, 8) verbindet,
- einen Hauptabfluss (5) zum Sammeln des Abwassers,
- einen Kanal (10), welcher den Hauptabfluss (5) mit der anderen Ausgangsmündung (22, 23) des Bypassventils (2, 8) verbindet,
- wobei das Bypassventil (2, 8) die Ausgangsmündungen (22, 23) verschließt und öffnet, abhängig von der Temperatur des Wassers, welches durch die Eingangsmündungen (20) hindurchtritt, so dass das Abwasser entweder zu der Wärmerückgewinnungsvorrichtung (3) oder zu dem Hauptabfluss (5) gelenkt wird,
**dadurch gekennzeichnet, dass**
das Bypassventil (2, 8) eine zylindrische Schale (19, 19') aufweist, umfassend eine Achse und die mindestens eine Eingangsmündung (20) und die zwei Ausgangsmündungen (22, 23) auf ihrer zylindrischen Wand, wobei die zylindrische Schale (19, 19') weiterhin ein gebogenes Gatter (26) umschließt, welches die Form eines Kreissegmentes aufweist, das einen kleineren Radius als die zylindrische Schale (19, 19') hat, wobei das gebogene Gatter (26) in die innere Oberfläche der zylindrischen Schale (19, 19') eingepasst ist und auf einen Rotationsschaft aufgesetzt ist, welcher mit der Achse der zylindrischen Schale (19, 19') zusammenfällt, um welchen es rotieren kann zwischen alternierenden schließenden und öffnenden Positionen der einen oder der anderen Ausgangsmündung (22, 23), wobei das gebogene Gatter (26) verbindbar ist mit einem Bedienelement,
wobei das Bypassventil (2, 8) kombiniert ist mit einer Siphonfalle, die eine Eingangskammer (33) und eine Ausgangskammer (34) umfasst, wobei die Kammern (33, 34) unterteilt sind durch eine Unterteilung, die in der zylindrischen Schale (19, 19') angeordnet ist, wobei die mindestens eine Eingangsmündung (20) auf dem Teil der zylindrischen Schale (19, 19") angeordnet ist, welcher die Eingangskammer (33) verschließt, und wobei die Ausgangsmündungen (22, 23) auf dem Teil der zylindrischen Schale (19, 19') angeordnet sind, welcher die Ausgangskammer (34) verschließt, wobei das gebogene Gatter (26) innerhalb der Ausgangskammer (34) montiert ist.

2. Netzwerk nach Anspruch 1, wobei die zylindrische Schale (19, 19') zwei Basen und einen Gatterschaft umfasst, wobei das Bedienelement aus einem elektronischen Mikromotor besteht, welcher extern auf einer der Basen der zylindrischen Schale (19, 19') angeordnet ist und mit dem Schaft des gebogenen Gatters (26) verbunden ist.

3. Netzwerk nach Anspruch 1, **dadurch gekennzeichnet, dass** das gebogene Gatter (26) eine Armierung umfasst, welche zusammengesetzt ist aus zwei koplanaren radialen Armen (27), welche verlaufen zwischen einer konkaven Oberfläche des gebogenen Gatters (26) und einem zentralen Ring, welcher koaxial angeordnet ist zu dem Rotationsschaft des Gatters (26), der zusammenfällt mit der Achse der zylindrischen Schale (19, 19').

## Revendications

1. Réseau d'évacuation d'eaux résiduaires, comprenant :
- une soupape de dérivation (2, 8) équipée d'au moins un orifice d'entrée (20) et de deux orifices de sortie (22, 23) ;
- un certain nombre d'appareils sanitaires (6) qui peuvent de manière facultative être utilisés avec de l'eau chaude, chaque appareil sanitaire (6) possédant un drain pour les eaux usées ;
- les drains desdits appareils sanitaires (6) étant reliés à l'orifice d'entrée ou aux orifices d'entrée (20) ;
- une installation de récupération de chaleur (3) ;
- un canal (4, 9) reliant l'installation de récupération de chaleur (3) à un des orifices de sortie (22, 23) de la soupape de dérivation (2, 8) ;
- un drain principal (5) pour la récolte des eaux usées ;
- un canal (10) reliant le drain principal (5) à l'autre orifice de sortie (22, 23) de la soupape de dérivation (2, 8) ;
- dans lequel la soupape de dérivation (2, 8) ferme et ouvre les orifices de sortie (22, 23) en fonction de la température de l'eau qui passe par lesdits orifices d'entrée (20) d'une manière telle que les eaux usées sont dirigées, soit en direction de l'installation de récupération de chaleur (3), soit en direction du drain principal (5) ;
**caractérisé en ce que**
la soupape de dérivation (2, 8) comprend une enveloppe cylindrique (19, 19') possédant un axe et ledit au moins un orifice d'entrée (20) et les deux orifices de sortie (22, 23) sur sa paroi cylindrique, l'enveloppe cylindrique (19, 19') renfermant en outre une grille courbe (26) qui prend la forme d'un segment d'un cercle dont le rayon est inférieur à celui de l'enveloppe cylindrique (19, 19'), cette grille courbe (26) venant s'appliquer contre la surface interne de l'enveloppe cylindrique (19, 19') et étant montée sur un arbre rotatif coïncidant avec l'axe de l'enveloppe cylindrique (19, 19'), sur lequel elle peut effectuer des rotations entre des positions alternées de fermeture et d'ouverture de l'un ou de l'autre orifice de sortie (22, 23), ladite grille courbe (26) pouvant être reliée à un moyen d'actionnement ;
dans lequel la soupape de dérivation (2, 8) est combinée à un siphon comprenant une chambre d'entrée (33) une chambre de sortie (34), lesdites chambres (33, 34) étant subdivisées par une paroi de séparation montée dans l'enveloppe cylindrique (19, 19') ; dans lequel ledit au moins un orifice d'entrée (20) est disposé sur la partie de l'enveloppe cylindrique (19, 19') qui ferme la chambre d'entrée (33), et les orifices de sortie (22, 23) sont disposés sur la partie de l'enveloppe cylindrique (19, 19') qui ferme la chambre de sortie (34), la grille courbe (26) étant montée au sein de la chambre de sortie (34).

2. Réseau selon la revendication 1, dans lequel l'enveloppe cylindrique (19, 19') comprend deux bases et un arbre de grille ; dans lequel le moyen d'actionnement est constitué d'un micromoteur électronique disposé à l'extérieur sur une des bases de l'enveloppe cylindrique (19, 19') et relié à l'arbre de la grille courbe (26).

3. Réseau selon la revendication 1, **caractérisé en ce que** la grille courbe (26) comprend un blindage qui se compose de deux bras radiaux coplanaires (27) qui s'étendent entre une surface concave de la grille courbe (26) et un anneau central qui est coaxial par rapport à l'arbre rotatif de ladite grille (26) coïncidant avec l'axe de l'enveloppe cylindrique (19, 19').
